# EUROPEAN PATENT APPLICATION

(11) **EP 4 102 814 A1**
(43) Date of publication of application: **14.12.2022**
(21) Application number: 21751216.9
(22) Date of filing: 01.02.2021
(51) Int. Cl.: H04N 1/00, B41J 29/38, G06F 3/12

(54) **PRINTING SYSTEM**

(30) Priority: 03.02.2020 JP 2020016011
(71) Applicant: KYOCERA Document Solutions Inc., Osaka-shi, Osaka, 540-8585 (JP)
(72) Inventor: MAGALLANES Raffy, Osaka-Shi, Osaka 540-8585 (JP); RENES Reuben Anthony, Osaka-Shi, Osaka 540-8585 (JP)
(74) Representative: BRP Renaud & Partner mbB Rechtsanwälte Patentanwälte Steuerberater
(86) International application number: PCT/JP2021/003543
(87) International publication number: WO 2021/157526

(57) **Abstract**

On receiving a print request message (PM) from a communication terminal (2), a server (3) recognizes that it has received a print request, stores the target file for which it has received the print request in a storage (4) in association with ID information, and transmits the ID information to the communication terminal (2). On accepting input of the ID information, an image forming apparatus (1) acquires the target file corresponding to the input ID information, and performs printing of the target file.

## Description

### Technical Field

The present invention relates to a printing system.

### Background Art

Patent Document 1 identified below discloses a printing system (message service system) provided with a server (bot server) that functions as a chat bot. The server exchanges messages with communication terminals (user terminals) such as smartphones. If a message received from a communication terminal contains a print request, the server makes an image forming apparatus perform printing.

### Citation List

### Patent Literature

Patent Document 1: JP-A-2019-164652

### Summary of Invention

### Technical Problem

The printing system disclosed in Patent Document 1 includes a plurality of image forming apparatuses. If a message received from a communication terminal contains a print request, the server makes, among the plurality of image forming apparatuses, a particular image forming apparatus (an image forming apparatus specified by a user beforehand) perform printing.

According to Patent Document 1, a print request can be issued easily (simply by including a print request in a message addressed to the server). Inconveniently, according to Patent Document 1, when a print request is issued, printing is performed on the particular image forming apparatus. If a user wants to make another image forming apparatus perform printing, the user has to change settings so that printing will be performed on that image forming apparatus. This is troublesome and inconvenient to the user.

Devised to give a solution to the problem mentioned above, the present invention is aimed at providing such a printing system including a plurality of image forming apparatuses as permits easy issuing of a print request and permits, after the issuance of the print request, free selection of an image forming apparatus on which to perform printing.

### Solution to Problem

To achieve the above object, according to one aspect of the present invention, a printing system includes a plurality of image forming apparatuses that perform printing, a communication terminal that has a message application installed thereon for displaying in a chat format messages exchanged with a partner terminal, and a server that, on receiving a message from the communication terminal, automatically creates and transmits a reply message back. On receiving as a message a print request message requesting printing of a file from the communication terminal, the server judges that it has received a print request, stores the target file for which the server has received the print request in a storage in association with ID information, and transmits the ID information to the communication terminal. The plurality of image forming apparatuses each accepts input of the ID information. Any of the image forming apparatuses that has accepted input of the ID information acquires the target file corresponding to the input ID information, and performs printing of the acquired target file.

### Advantageous Effects of Invention

With a configuration according to the present invention, it is possible to issue a print request easily and, after the issuance of the print request, to freely select an image forming apparatus on which to perform printing.

### Brief Description of Drawings

FIG. 1 is a schematic diagram showing a configuration of a printing system according to one embodiment of the present invention.
FIG. 2 is a block diagram showing a configuration of a printing system according to one embodiment of the present invention.
FIG. 3 is a diagram showing a message screen displayed on a communication terminal in a printing system according to one embodiment of the present invention.
FIG. 4 is a diagram showing a message screen, with a print request message added on it, displayed on a communication terminal in a printing system according to one embodiment of the present invention.
FIG. 5 is a diagram showing a message screen, with a print request message added on it, displayed on a communication terminal in a printing system according to one embodiment of the present invention.
FIG. 6 is a flow chart showing a procedure performed by a server in a printing system according to one embodiment of the present invention.
FIG. 7 is a diagram showing installation locations of image forming apparatuses in a printing system according to one embodiment of the present invention.
FIG. 8 is a diagram showing a message screen, with a response message added on it, displayed on a communication terminal in a printing system according to one embodiment of the present invention.
FIG. 9 is a diagram showing a message screen, with an error message added on it, displayed on a communication terminal in a printing system according to one embodiment of the present invention.
FIG. 10 is a flow chart showing a procedure performed by an image forming apparatus in a printing system according to one embodiment of the present invention.

### Description of Embodiments

### < Configuration of a Printing System >

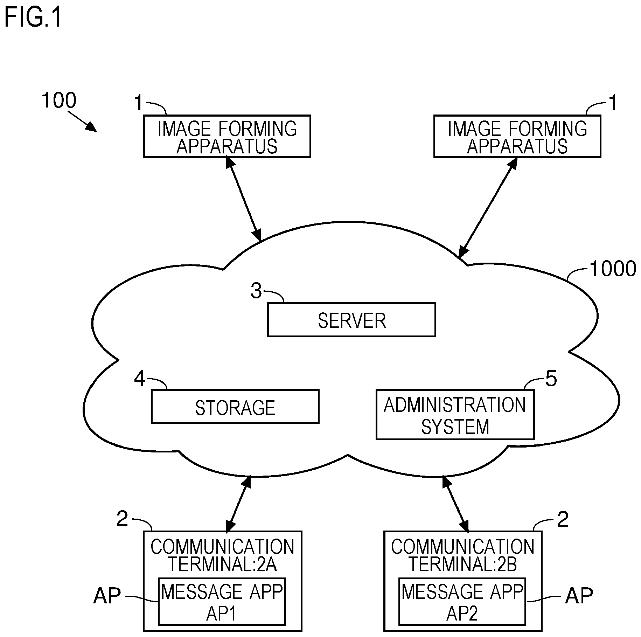

As shown in FIG. 1, a printing system 100 according to an embodiment includes an image forming apparatus 1, a communication terminal 2, and a server 3. The printing system 100 provides printing services.

The image forming apparatus 1 performs printing. There is no restriction on the number of image forming apparatuses 1 included in the printing system 100. The printing system 100 may include a plurality of image forming apparatuses 1. The plurality of image forming apparatuses 1 are installed at commercial facilities, public facilities, and the like.

The communication terminal 2 is a mobile terminal such as a smartphone or a tablet computer. The user of the communication terminal 2 uses printing services. The communication terminals 2 can communicate with the server 3.

The server 3 is installed on a cloud 1000. There is no restriction on the number of servers 3 included in the printing system 100. There may be provided one server 3 or a plurality of servers 3. The server 3 is connected to a storage 4 on the cloud 1000 such that communication is possible between them. Each image forming apparatus 1 may be allowed access to the storage 4. The storage 4 maybe omitted. Instead of the storage 4, a storage device provided in the server 3 may be used.

The server 3 is connected also to an administration system 5 that administers the plurality of image forming apparatuses 1. The administration system 5 stores apparatus information about the plurality of image forming apparatuses 1. The apparatus information includes, for example, location information about each of the plurality of image forming apparatuses 1 (hereinafter referred to as apparatus location information). When a new image forming apparatus 1 is added to the printing system 100, or when an existing image forming apparatus 1 is removed from the printing system 100, the apparatus information is updated. The apparatus information may be stored on the server 3. That is, the plurality of image forming apparatuses 1 may be administered by the server 3.

The server 3 runs a chat bot program. The server 3 thereby functions as a chat bot that automatically replies to a received message. On receiving a message, the server 3 replies to it automatically.

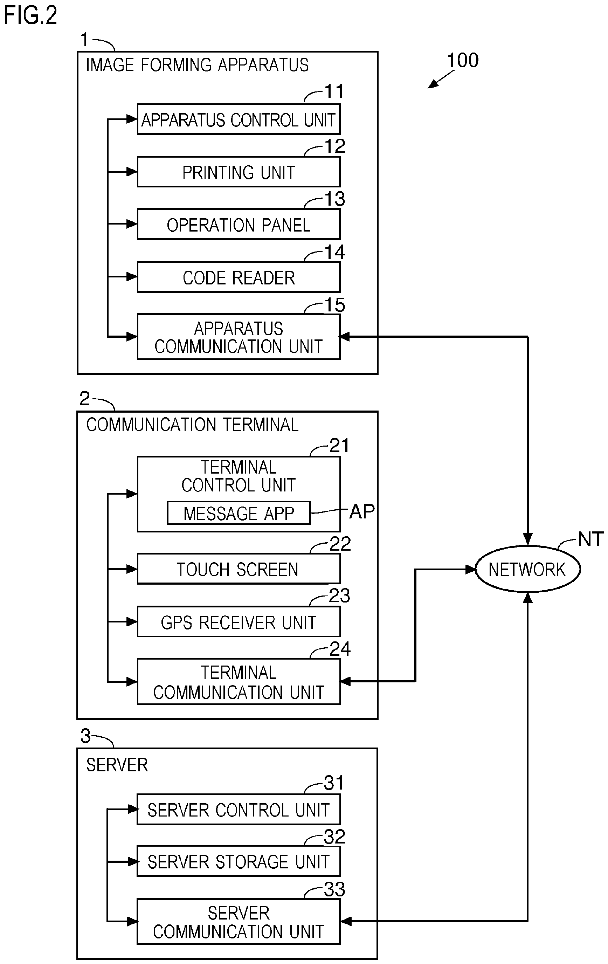

As shown in FIG. 2, the image forming apparatus 1 includes an apparatus control unit 11 and a printing unit 12. The apparatus control unit 11 includes a CPU and a memory. The apparatus control unit 11 controls the image forming apparatus 1. The apparatus control unit 11 also controls the printing operation of the printing unit 12.

The printing unit 12 conveys a sheet and prints an image on the sheet being conveyed. The printing unit 12 may employ any printing methods including laser printing and ink-jet printing. The printing unit 12 performs printing, for example, by laser printing.

That is, the printing unit 12 includes a pair of transfer rollers. The pair of transfer rollers includes a photosensitive drum and a transfer roller. The photosensitive drum carries a toner image on its circumferential face. The transfer roller is in pressed contact with the photosensitive drum to form a transfer nip against it. The printing unit 12 includes a charging device, an exposure device, and a developing device. The charging device electrostatically charges the circumferential face of the photosensitive drum. The exposure device forms an electrostatic latent image on the circumferential face of the photosensitive drum. The developing device develops the electrostatic latent image formed on the circumferential face of the photosensitive drum into a toner image. While rotating, the pair of transfer rollers conveys the sheet that has entered the transfer nip and meanwhile transfers the toner image to the sheet.

The image forming apparatus 1 includes an operation panel 13. The operation panel 13 accepts settings and instructions related to printing. The apparatus control unit 11 senses operations performed on the operation panel 13.

The image forming apparatus 1 includes a code reader 14 (corresponding to a "reading unit"). The code reader 14 reads code images. A code image is, for example, an image of a two-dimensional code such as a QR code (a registered trademark). The apparatus control unit 11 recognizes the information embedded in the code image read by the code reader 14.

The image forming apparatus 1 includes an apparatus communication unit 15. The apparatus communication unit 15 includes a communication circuit. The apparatus communication unit 15 is connected to a network NT such as the Internet such that communication is possible between them. Using the apparatus communication unit 15, the apparatus control unit 11 communicates with the server 3. Likewise, using the apparatus communication unit 15, the apparatus control unit 11 communicates with the storage 4 and with the administration system 5.

The plurality of image forming apparatuses 1 may have identical specifications or may have different specifications. For example, among the plurality of image forming apparatuses 1, some image forming apparatuses 1 may be of a color printing type and the other image forming apparatuses 1 may be of a monochrome printing type. For another example, some image forming apparatuses 1 may be provided with an optional device such as a finisher and the other image forming apparatuses 1 may be provided with no optional device.

The communication terminal 2 includes a terminal control unit 21 and a touch screen 22. The terminal control unit 21 includes a CPU and a memory. The terminal control unit 21 controls the communication terminal 2. The touch screen 22 displays a screen and accepts operations from the user. The terminal control unit 21 controls the display operation of the touch screen 22, and also senses operations performed on the touch screen 22.

The communication terminal 2 includes a GPS receiver unit 23. The GPS receiver unit 23 includes a GPS antenna. The GPS receiver unit 23 receives GPS signals transmitted from GPS satellites. Based on the GPS signals received by the GPS receiver unit 23, the terminal control unit 21 acquires location information (hereinafter referred to as terminal location information) that indicates the current location of the own terminal (local terminal).

The communication terminal 2 includes a terminal communication unit 24. The terminal communication unit 24 includes a communication circuit. The terminal communication unit 24 is connected to a network NT such as the Internet such that communication is possible between them. Using the terminal communication unit 24, the terminal control unit 21 accesses the network NT.

The communication terminal 2 has a message application AP (hereinafter abbreviated as a "message app AP") installed on it. The message app AP is stored on the memory in the terminal control unit 21. The message app AP is an application that displays messages (messages including text, images, and the like) exchanged with (i.e., transmitted to and received from) a partner terminal (remote terminal) in a chat format. A partner terminal can be a smartphone having a message app AP installed on it, or can be the server 3.

For example, consider the following case: as shown in FIG. 1, one communication terminal 2 (2A) has a message app AP (API) installed on it; on the other hand, another communication terminal 2 (2B) has another message app AP (AP2), of a different kind from the message app API, installed on it, without the message app API being installed on it. In this case, messages cannot be exchanged between the communication terminals 2A and 2B via the message app API. If the communication terminal 2B has the message app API installed on it, messages can be exchanged between the communication terminals 2A and 2B via the message app AP1. If the communication terminal 2A has the message app AP2 installed on it, messages can be exchanged between the communication terminals 2A and 2B via the message app AP2.

When an operation to start up the message app AP (an operation of tapping the icon of the message app AP) is performed on the touch screen 22, the terminal control unit 21 runs the message app AP. The terminal control unit 21 then makes the touch screen 22 display an interface screen of the message app AP.

The touch screen 22 displays, as the interface screen of the message app AP, a partner selection screen (not illustrated) for accepting selection of a chat partner. For example, as the chat partner, one person can be selected (one-to-one chatting is possible). Or, as the chat partner, a plurality of persons can be selected (group chatting is possible).

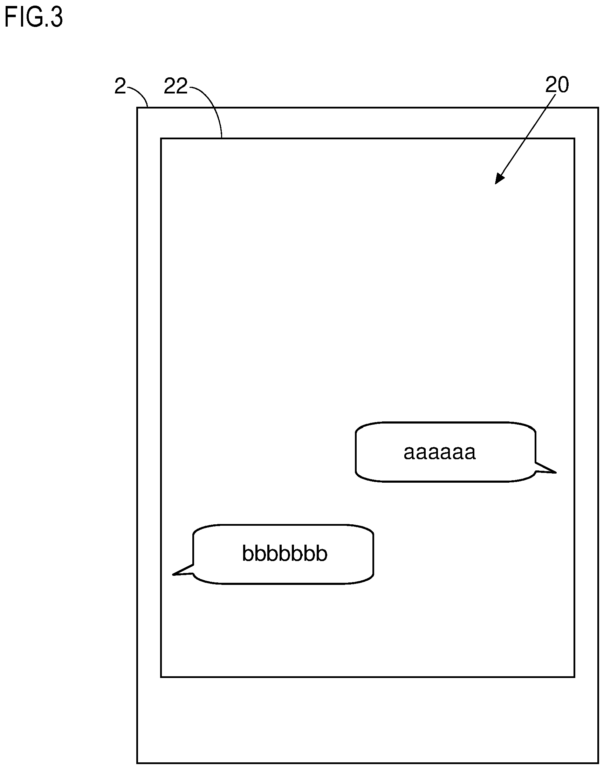

The touch screen 22 displays, as the interface screen of the message app AP, a message screen 20 as shown in FIG. 3. While the message screen 20 is displayed, the touch screen 22 accepts an operation for input of a message. On accepting input of a message, the touch screen 22 accepts an operation for message transmission.

When the touch screen 22 accepts an operation for message transmission, the terminal control unit 21, using the terminal communication unit 24, transmits the message input by the input operation to a partner terminal (such as a smartphone owned by the chat partner selected on the partner selection screen). The terminal control unit 21 also makes the touch screen 22 display the message transmitted to the partner terminal. The touch screen 22 arranges the transmitted message within the message screen 20. In FIG. 3, the transmitted message is represented by a sequence of the letter "a".

The terminal communication unit 24 receives from the partner terminal a reply message in response to the transmitted messages. When the terminal communication unit 24 receives the reply message, the terminal control unit 21 makes the touch screen 22 display the reply message from the partner terminal on the touch screen 22. The touch screen 22 arranges, along with the transmitted messages, the reply message within the message screen 20. In other words, the touch screen 22 displays those messages in a chat format. In FIG. 3, the reply message is represented by a sequence of the letter "b".

Referring back to FIG. 2, the server 3 includes a server control unit 31 and a server storage unit 32. The server control unit 31 includes a CPU and a memory. The server control unit 31 controls the server 3. The chat bot program is stored on the memory in the server control unit 31. The server storage unit 32 includes a large-capacity storage device such as an HDD. The server control unit 31 writes data to, and reads data from, the server storage unit 32.

The server 3 also includes a server communication unit 33. The server communication unit 33 includes a communication circuit. The server communication unit 33 is connected to a network NT such as the Internet such that communication is possible between them. Using the server communication unit 33, the server control unit 31 communicates with the communication terminal 2. Likewise, using the server communication unit 33, the server control unit 31 communicates with the storage 4 and with the administration system 5.

Here, a message created using the message app AP can be transmitted from the communication terminal 2 to the server 3. The message from the communication terminal 2 is received by the server communication unit 33. The server control unit 31 recognizes the communication terminal 2 (partner terminal) that has transmitted the message to the server 3. The server control unit 31 further runs the chat bot program and thereby automatically creates a reply message in response to the message from the communication terminal 2. The server control unit 31 then transmits the reply message back to the partner terminal. In the following description, a reply message automatically created on the server 3 is identified by the reference sign "RM" for distinction from other reply messages.

Here, the server 3 receives any message created using a message app AP and transmitted from the communication terminal 2 (partner terminal) to the server 3 (own terminal) irrespective of the type of message app AP used. The server 3 then transmits an automatically created reply message RM back to the partner terminal. That is, the chat bot program is compatible with a plurality of different kinds of message app AP. The chat bot program has built in it a function of automatically creating reply messages RM in response to messages originating from the plurality of kinds of message app AP. The server 3 replies both to messages from the communication terminal 2A (messages created using the message app API) and to messages from the communication terminal 2B (messages created using the message app AP2).

### < Quick Print Function >

The user of the communication terminal 2 can use a quick print function of the printing system 100. The user of the communication terminal 2 can, using the message app AP installed on the user's communication terminal 2, request printing of a file (containing document data, image data, or the like). The user of the communication terminal 2 can make one of the plurality of image forming apparatuses 1 in the printing system 100 perform printing.

By requesting printing of a file, the user of the communication terminal 2 can know the image forming apparatus 1 located physically nearest among the plurality of image forming apparatuses 1 in the printing system 100. Accordingly, when the user of the communication terminal 2 wishes to print a file, the user can, even with no printing means at hand, print the file quickly using the message app AP.

To use the quick print function, the user first starts up the message app AP installed on his communication terminal 2, and then makes the communication terminal 2 display the message screen 20.

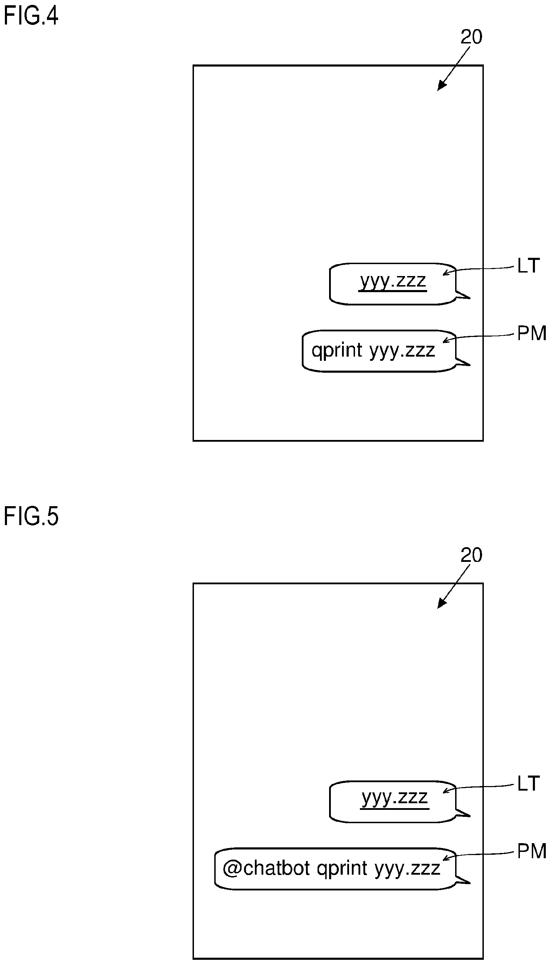

While the message screen 20 is displayed, the terminal control unit 21 makes the touch screen 22 accept an operation to input a print request message PM (see FIGS. 4 and 5) which is a message (command) requesting printing of a file. The operation to enter the print request message PM is the same as the operation to enter an ordinary message.

For example, when the chat bot (server 3) is selected as the chat partner, the terminal control unit 21 recognizes a message like "qprint yyy.zzz" shown in FIG. 4 as the print request message PM. A file name is substituted in "yyy.zzz" in the print request message PM. The same applies to the following description.

For another example, when the chat bot (server 3) is not selected as the chat partner, the terminal control unit 21 recognizes a message like "@chatbot qprint yyy.zzz" shown in FIG. 5 as the print request message PM. When a one-to-one chat is underway and the chat partner is not the chat bot, or when a group chat is underway, the print request message PM shown in FIG. 5 can be entered. Putting "@chatbot" in the print request message PM sets the transmission destination of the print request message PM to the chat bot. This prevents a print request message PM from being transmitted to a chat partner other than the chat bot.

After input of the print request message PM is accepted, when the touch screen 22 accepts a message transmission operation, the terminal control unit 21 transmits, along with the file (here referred to as the target file) of which printing is requested, the print request message PM to the server 3. The target file may be uploaded beforehand.

Transmitting the print request message PM to the server 3 results in, as shown in FIGS. 4 and 5, the print request message PM being displayed on the message screen 20. On the message screen 20 is also arranged a link text LT to the target file. Tapping the display region of the link text LT results in the target file (text, an image, or the like) being displayed on the touch screen 22. Though not illustrated, if the target file does not exist, an error screen is displayed on the touch screen 22.

When transmitting the print request message PM to the server 3, the terminal control unit 21 recognizes, based on the GPS signals received by the GPS receiver unit 23, the current location of the own terminal. The terminal control unit 21 then transmits, along with the print request message PM, terminal location information indicating the current location of the own terminal.

The communication terminal 2 can switch the GPS function on and off. With the GPS function off, the terminal communication unit 24 cannot recognize the location of the own terminal. In that case, an error screen (not illustrated) is displayed on the touch screen 22.

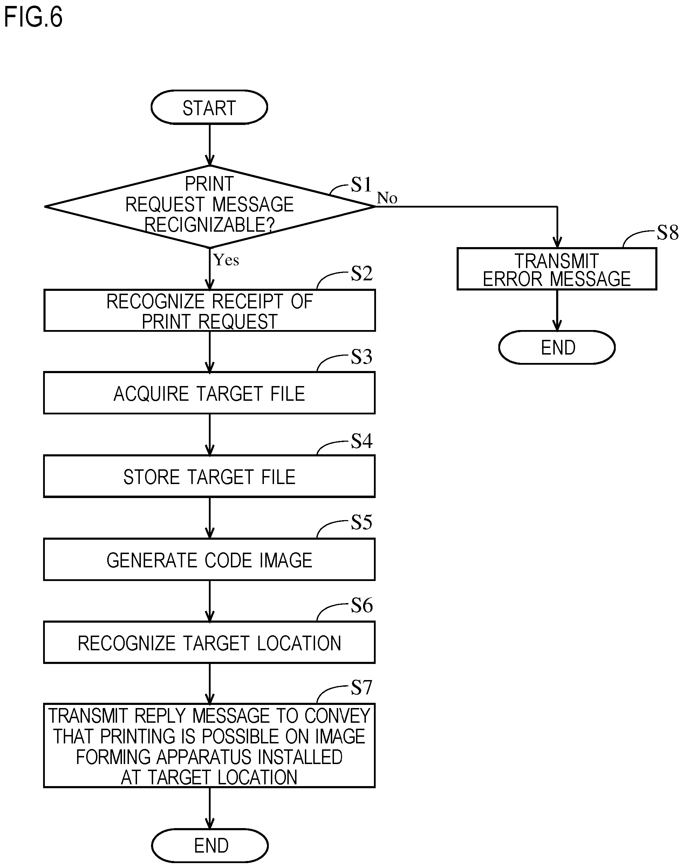

On receiving the print request message PM from the communication terminal 2, the server 3 performs a procedure according to the flow chart shown in FIG. 6. The procedure shown in FIG. 6 starts when the server control unit 31 recognizes that the server communication unit 33 has received the print request message PM.

At step S1, the server control unit 31 judges whether it can recognize a print request message PM. If the server control unit 31 judges that it can recognize a print request message PM, an advance is made to step S2.

At step S2, the server control unit 31 judges that it has received a print request. Here, the server 3 receives any message created using an message app AP and transmitted from the communication terminal 2 (partner terminal) to the server 3 (own terminal) irrespective of the type of message app AP used. If the message is a print request message PM, the server control unit 31 judges that it has received a print request. That is, the user can issue a print request using an existing message app AP without having to additionally install a dedicated application on the user's own communication terminal 2.

At step S3, the server control unit 31 recognizes the file with the file name indicated by the print request message PM as the file that is the target of printing (here, referred to as the target file). The server control unit 31 then acquires the target file for which it has received the print request. If the file with the file name indicated by the print request message PM is, along with the print request message PM, transmitted to the server 3, that file is acquired as the target file. If the file with the file name indicated by the print request message PM has been uploaded beforehand, that file is acquired as the target file.

For example, suppose that a user (first user) has uploaded a file. In this case, if another user (second user) transmits a print request message PM that contains the file name of the first user's file to the server 3, the first user's file is acquired as the target file. That is, the second user can request printing of the first user's file.

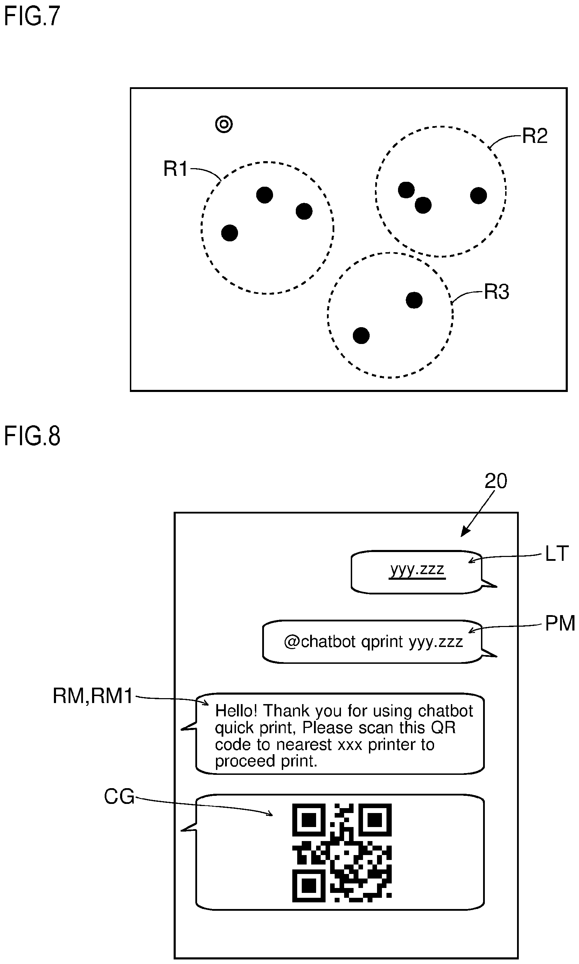

At step S4, the server control unit 31 generates ID information to be associated with the target file. The server control unit 31 then stores the target file associated with that ID information in the storage 4. At step S5, the server control unit 31 generates a code image CG (see FIG. 8) indicating the ID information associated with the target file. The server control unit 31 generates as the code image CG an image of a two-dimensional code.

At step S6, the server control unit 31 acquires the terminal location information that it has received along with the print request message PM, and recognizes the current location of the communication terminal 2 indicated by the terminal location information. The server control unit 31 then recognizes as a target location the installation location of the image forming apparatus 1 that is located near the current location of the communication terminal 2 that has issued the print request.

To recognize the target location, using the server communication unit 33, the server control unit 31 transmits current location information that indicates the current location of the communication terminal 2 that has issued the print request. Based on the apparatus information, the administration system 5 performs an identification process to identify one or more image forming apparatuses 1 located near the location indicated by the current location information. For example, the administration system 5 performs as the identification process a process in which it identifies the image forming apparatus 1 installed at the location nearest to the location indicated by the current location information.

Instead, as shown in FIG. 7, the administration system 5 can administer the plurality of image forming apparatuses 1 in the printing system 100 on a region-by-region basis. The administration system 5 then performs as the identification process a process in which it identifies one or more image forming apparatuses 1 installed in the region nearest to the location indicated by the current location information. In FIG. 7, those regions are enclosed by broken lines and are identified by the reference signs R1 to R3 respectively. The installation locations of the image forming apparatuses 1 are indicated by black dots, and the current location of the communication terminal 2 that has issued the print request is indicated by a double circle. In the example shown in FIG. 7, identified by the identification process are the three image forming apparatuses 1 installed in region R1.

The administration system 5 transmits the apparatus location information about the image forming apparatus 1 identified in the identification process to the server 3. Based on the apparatus location information from the administration system 5, the server control unit 31 recognizes the installation location of an image forming apparatus 1 located near the current location of the communication terminal 2 that has issued the print request. That is, the server control unit 31 recognizes as the target location the installation location of the image forming apparatus 1 physically nearest to the current location of the communication terminal 2 that has issued the print request. Or, the server control unit 31 recognizes as the target location the installation location of one or more image forming apparatuses 1 in the region physically nearest to the current location of the communication terminal 2 that has issued the print request.

The server 3 may be configured to perform the identification process. Storing apparatus information on the server 3 enables it to perform the identification process.

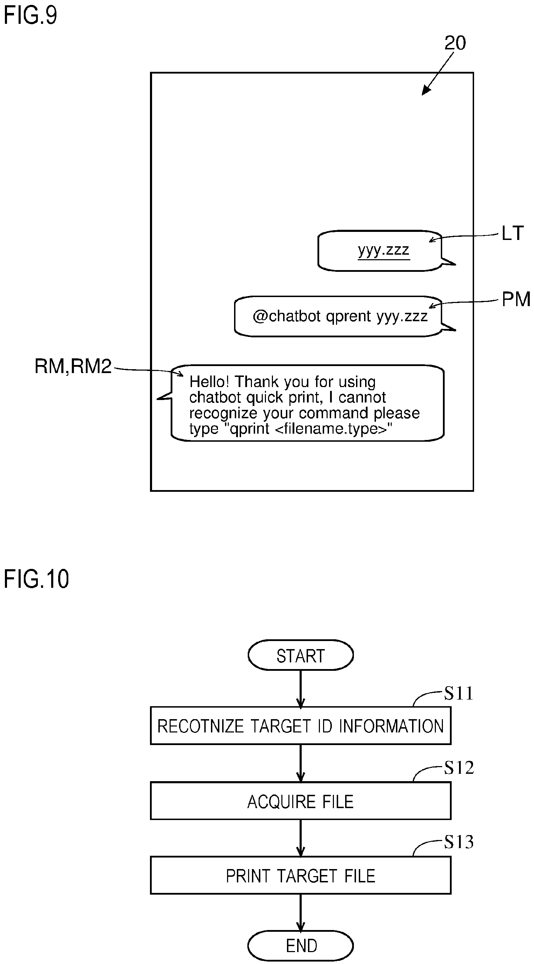

Referring back to FIG. 6, at step S7, the server control unit 31 automatically generates a reply message RM (see FIG. 8) conveying that printing is possible on the image forming apparatus 1 installed at the target location. The server control unit 31 includes target location information indicating the target location in the reply message RM. In the following description, the reply message RM generated at this time is identified by the reference sign RM1 for distinction from an error message RM2 (see FIG. 9), which too is one of reply messages RM and which will be described later.

After generating the reply message RM1, using the server communication unit 33, the server control unit 31 transmits the reply message RM1 to the communication terminal 2 that has issued the print request. In other words, using the server communication unit 33, the server control unit 31 transmits the target location information indicating the target location to the communication terminal 2 that has issued the print request. At this time, using the server communication unit 33, the server control unit 31 transmits to the communication terminal 2 that has issued the print request also a code image CG (see FIG. 8) indicating the ID information associated with the target file.

As shown in FIG. 8, the reply message RM1 and the code image CG are displayed on the communication terminal 2 that has issued the print request. On receiving the reply message RM1 and the code image CG, the terminal control unit 21 makes the touch screen 22 display the reply message RM1 and the code image CG. Or, after receiving the reply message RM1 and code image CG, when a predetermined message confirmation operation is performed on the touch screen 22, the terminal control unit 21 makes the touch screen 22 display the reply message RM1 and the code image CG. The touch screen 22 displays the reply message RM1 and the code image CG in a chat format on the message screen 20 on which the print request message PM is arranged.

Referring back to FIG. 6, if at step S1 the server control unit 31 judges that it cannot recognize a print request message PM, a jump is made to step S8. At step S8, the server control unit 31 automatically generates an error message RM2 (see FIG. 9) as the reply message RM in response to the print request message PM. The server control unit 31 then, using the server communication unit 33, transmits the error message RM2 to the communication terminal 2 that has issued the print request.

As shown in FIG. 9, the error message RM2 is displayed on the communication terminal 2 that has issued the print request. On receiving the error message RM2, the terminal control unit 21 makes the touch screen 22 display the error message RM2. Or, after receiving the error message RM2, when a predetermined message confirmation operation is performed on the touch screen 22, the terminal control unit 21 makes the touch screen 22 display the error message RM2. The touch screen 22 displays the error message RM2 in a chat format on the message screen 20 on which the print request message PM is arranged.

In the example shown in FIG. 9, a part of the print request message PM which should correctly read "qprint" actually reads "qprent". Accordingly, at step S1 it is judged to be unrecognizable. Thus, an error message RM2 is transmitted.

When the communication terminal 2 has received the reply message RM1 and the code image CG, the target file is ready to be printed. For example, the user goes to the installation location of the image forming apparatus 1 indicated by the reply message RM1, and makes the image forming apparatus 1 print the target file. The user can make any other of the plurality of image forming apparatuses 1 in the printing system 100 than the image forming apparatus 1 indicated by the reply message RM1 print the target file.

When printing the target file, the user makes the user's own communication terminal 2 display the message screen 20 (see FIG. 8) with the code image CG arranged on it. The user then holds the message screen 20 over the code reader 14 of the image forming apparatus 1 to make the code reader 14 read the code image CG, and thereby inputs the ID information associated with the target file (i.e., the ID information embedded in the code image CG) to the image forming apparatus 1. In other words, the image forming apparatus 1 accepts input of the ID information associated with the target file.

On reading the code image CG (i.e., on accepting input of the ID information), the image forming apparatus 1 that has read the code image CG performs a procedure according to the flow chart shown in FIG. 10. The procedure shown in FIG. 10 starts when the image forming apparatus 1 judges that the code reader 14 has read the code image CG.

At step S11, the apparatus control unit 11 recognizes the ID information embedded in the code image CG read by the code reader 14. The apparatus control unit 11 recognizes that ID information as target ID information. Then, at step S12, the apparatus control unit 11 performs a file acquisition process to acquire the file (here referred to as the target file) corresponding to the target ID information from the storage 4.

Specifically, using the apparatus communication unit 15, the apparatus control unit 11 transmits the target ID information to the administration system 5. The administration system 5 forwards the target ID information to the server 3. The server 3 acquires the target file corresponding to the target ID information from the storage 4, and transmits the target file via the administration system 5 to the image forming apparatus 1. The target file is received by the apparatus communication unit 15. The apparatus control unit 11 acquires the target file received by the apparatus communication unit 15.

In a configuration where the image forming apparatus 1 and the server 3 are connected together such that communication is possible between them, the target ID information may be transmitted directly from the image forming apparatus 1 to the server 3. In that case, the target file is transmitted directly from the server 3 to the image forming apparatus 1. In a configuration where the image forming apparatus 1 and the storage 4 are connected together such that communication is possible between them, the image forming apparatus 1 may acquire the target file directly from the storage 4.

At step S13, the apparatus control unit 11 makes the operation panel 13 accept settings related to printing of the target file, such as the number of copies to be printed. After that, when the operation panel 13 accepts an instruction to perform printing, the apparatus control unit 11 makes the printing unit 12 perform printing of the target file.

As described above, a printing system 100 according to the embodiment includes a plurality of image forming apparatuses 1, a communication terminal 2, and a server 3 (chat bot). The plurality of image forming apparatuses 1 perform printing. The communication terminal 2 has installed on it a message app AP for displaying messages exchanged with a partner terminal in a chat format. On receiving from the communication terminal 2 a message created using the message app AP, the server 3 automatically creates and transmits a reply message back in response to the received message.

On receiving from the communication terminal 2 a print request message PM that is a message created using the message app AP and requesting printing of a file, the server 3 recognizes that it has received a print request, stores the target file for which it has received the print request in the storage 4 in association with ID information, and transmits the ID information to the communication terminal 2.

The plurality of image forming apparatuses 1 each accept input of ID information.

On accepting input of the ID information, the image forming apparatus 1 acquires the target file corresponding to the input ID information, and performs printing of the acquired target file.

With the configuration according to the embodiment, it is possible to easily issue a print request using the message app AP installed on the communication terminal 2. Specifically, all that has to be done is to transmit a print request message PM to the server 3. Moreover, a print request for one user's file can be issued by another user. This is convenient to users.

Here, when a print request message PM is transmitted to the server 3, the server 3 transmits ID information back. Then, with any of the image forming apparatuses 1 in the printing system 100, it is possible, simply by inputting the ID information, to perform printing of the target file. That is, it is possible, after issuing a print request, to freely select an image forming apparatus 1 on which to perform printing. This provides enhanced convenience to users.

For example, it is possible to make the image forming apparatus 1 located physically nearest to a user's current location perform printing. While a user is moving from one location to another location, it is possible, for example, to make an image forming apparatus 1 located on the way perform printing.

According to the embodiment, as described above, the server 3 receives a message created using an message app AP and transmitted from the communication terminal 2 to the server 3 irrespective of the kind of message app AP used, and if the message received from the communication terminal 2 is a print request message PM judges that it has received a print request. With this configuration, there is no need to additionally install an application for issuing a print request, and this is convenient to the user.

According to the embodiment, as described above, on judging that it has received a print request, the server 3 recognizes the current location of the communication terminal 2 that has issued the print request. The server 3 then recognizes the installation location of the image forming apparatus 1 located physically nearest to the current location of the communication terminal 2 as the target location, and transmits target location information indicating the target location to the communication terminal 2 that has issued the print request. Or, the server 3 recognizes the installation location of one or more image forming apparatuses 1 located in a region physically nearest to the current location of the communication terminal 2 as the target location, and transmits target location information indicating the target location to the communication terminal 2 that has issued the print request. This configuration provides enhanced convenience to a user who wants printing performed near the location where the user currently is.

As a modified example, it is possible to transmit a search request message created using an message app AP to the server 3 so that information indicating the installation location of the image forming apparatus 1 located physically nearest to the current location of the communication terminal 2 will be transmitted back to the communication terminal 2.

According to the embodiment, as described above, the server 3 includes target location information in a reply message RM in response to a print request message PM. That is, the server 3 creates, as a reply message RM in response to a print request message PM, a message indicating a target location. The communication terminal 2 that has issued the print request displays the print request message PM and the reply message RM corresponding to the print request message PM in a chat formation. With this configuration, after the print request message PM is transmitted, leaving the message screen 20 displayed results in the reply message RM being added on the message screen 20. Thus, after a print request is issued, it is possible to grasp the installation location of an image forming apparatus 1 located nearby without performing an extra operation.

According to the embodiment, as described above, the server 3 transmits a code image CG indicating ID information to the communication terminal 2 that has issued the print request. The communication terminal 2 displays the code image CG. The plurality of image forming apparatuses 1 are each provided with a code reader 14 (reading unit) for reading the code image CG displayed on the communication terminal 2. On reading the code image CG, the image forming apparatus 1 recognizes the ID information embedded in the read code image CG, acquires the target file corresponding to the recognized ID information, and performs printing of the acquired file. In other words, by making the image forming apparatus 1 (code reader 14) read the code image CG, it is possible to input ID information to the image forming apparatus 1. With this configuration, ID information can be input to the image forming apparatus 1 easily, and this provides enhanced convenience to the user.

It should be understood that the embodiment disclosed herein is in every aspect illustrative and no restrictive. The scope of the present disclosure is defined not by the description of the embodiment given above but by the appended claims, and encompasses any modifications made without departure from the scope and sense equivalent to those claims.

## Claims

1. A printing system comprising:
a plurality of image forming apparatuses that perform printing;
a communication terminal having a message application installed thereon for displaying in a chat format a message exchanged with a partner terminal; and
a server that, on receiving the message from the communication terminal, automatically creates and transmits a reply message back,
wherein
on receiving as the message a print request message requesting printing of a file from the communication terminal, the server
judges that the server has received a print request,
stores a target file for which the server has received the print request in a storage in association with ID information, and
transmits the ID information to the communication terminal,
the plurality of image forming apparatuses each accepts input of the ID information, and
any of the image forming apparatuses that has accepted input of the ID information acquires the target file corresponding to the input ID information, and performs printing of the acquired target file.

2. The printing system according to claim 1, wherein
the server receives the message transmitted from the communication terminal to the server irrespective of a type of the message application, and
if the message received from the communication terminal is the print request message, the server judges that the server has received the print request.

3. The printing system according to claim 1, wherein
on judging that the server has received the print request, the server
recognizes a current location of the communication terminal that has issued the print request,
recognizes an installation location of one of the image forming apparatuses that is located physically nearest to the current location as a target location, and
transmits target location information indicating the target location to the communication terminal that has issued the print request.

4. The printing system according to claim 1, wherein
on judging that the server has received the print request, the server
recognizes a current location of the communication terminal that has issued the print request,
recognizes an installation location of one or more of the image forming apparatuses that are located in a region physically nearest to the current location as a target location, and
transmits target location information indicating the target location to the communication terminal that has issued the print request.

5. The printing system according to claim 3, wherein
the server includes the target location information in the reply message in response to the print request message, and
the communication terminal displays the print request message and the reply message in a chat formation.

6. The printing system according to claim 1, wherein
the server transmits a code image indicating the ID information to the communication terminal that has issued the print request,
the communication terminal displays the code image,
the plurality of image forming apparatuses each include a reading unit for reading the code image displayed on the communication terminal, and
any of the image forming apparatuses that has read the code image
recognizes the ID information embedded in the code image,
acquires the target file corresponding to the recognized ID information, and performs printing of the acquired target file.
